# EUROPEAN PATENT APPLICATION

(11) **EP 4 835 203 A1**
(43) Date of publication of application: **04.11.2026**
(21) Application number: 24911967.8
(22) Date of filing: 23.10.2024
(51) Int. Cl.: E02F 9/16, A01B 63/10, B62D 21/18, G05G 1/01, G05G 1/04

(54) **WORK VEHICLE**

(30) Priority: 27.12.2023 JP 2023220481
(71) Applicant: KUBOTA CORPORATION, Osaka-shi, Osaka 530-0011 (JP)
(72) Inventor: HAYASHIDA, Futa, Sakai-shi, Osaka 590-0908 (JP); YASUNOBE, Daisuke, Sakai-shi, Osaka 590-0908 (JP)
(74) Representative: Müller-Boré & Partner Patentanwälte PartG mbB
(86) International application number: PCT/JP2024/037784
(87) International publication number: WO 2025/142074

(57) **Abstract**

There is provided a working vehicle capable of enhancing operability of a position lever and hydraulic operation levers. The working vehicle includes: a position lever 310 that is disposed on a right console provided at a side of a seat, and can adjust a lift position of a lifting device; and a plurality of hydraulic operation levers (a first hydraulic operation lever 410A, a second hydraulic operation lever 410B, and a third hydraulic operation lever 410C) that are disposed on the console at positions on the rear side of the position lever 310, and can control feed of hydraulic pressure to an implement, and the position lever 310 and the hydraulic operation levers are disposed such that an operating direction in plan view is parallel to an operating direction of another lever disposed on the front side, or an angle with respect to a front-rear direction is greater than an angle of an operating direction of another lever disposed on the front side.

## Description

### TECHNICAL FIELD

The present invention relates to a technique for a working vehicle including hydraulic operation levers.

### BACKGROUND ART

Conventionally, there has been a known technique for a working vehicle including hydraulic operation levers to be used for controlling hydraulic pressure for an implement provided on a vehicle body. For example, such a technique is disclosed in Patent Literature 1.

Patent Literature 1 discloses a tractor including a plurality of hydraulic operation levers disposed at a side of a seat (on an upper portion of a fender) so as to be aligned in a front-rear direction. By operating a hydraulic operation lever, it is possible to operate a spool of a control valve connected to the hydraulic operation lever. Thus, feed of hydraulic pressure to an implement such as a snow removal machine provided on the tractor can be controlled, for example.

Here, as disclosed in Patent Literature 1, it is common for working vehicles such as tractors to be provided with a plurality of hydraulic operation levers for controlling implements. In addition to hydraulic operation levers, it is also common for position levers for controlling raising and lowering of implements to be provided in working vehicles. In such a working vehicle provided with a plurality of operating tools, an increase in operability of the operating tools is required in order to reduce work burden on the operator (driver).

### CITATION LIST

### PATENT LITERATURE

Patent Literature 1: JP 2002-250303 A

### SUMMARY OF INVENTION

### TECHNICAL PROBLEM

One aspect of the present disclosure has been made in view of such circumstances, and an object thereof is to provide a working vehicle that can enhance operability of a position lever and hydraulic operation levers.

### SOLUTION TO PROBLEM

The technical problem to be solved by one aspect of the present disclosure is as described above, and next, means for solving this technical problem will be described.

In one aspect of the present disclosure, a working vehicle includes: a position lever that is disposed on a console provided at a side of a seat and can adjust a lift position of a lifting device; and a plurality of hydraulic operation levers that are disposed on the console at positions on the rear side of the position lever and can control feed of hydraulic pressure to an implement, and the position lever and the hydraulic operation levers are disposed such that an operating direction in plan view is parallel to an operating direction of another lever disposed on the front side, or an angle with respect to a front-rear direction is greater than an angle of an operating direction of another lever disposed on the front side.

According to one aspect of the present disclosure, operability of the position lever and the hydraulic operation levers can be improved.

In one aspect of the present disclosure, the working vehicle includes: a first link mechanism that includes a first rocking portion rockable about a first rock shaft and transmits an operating force of the position lever; a first support portion that rockably supports the first rocking portion via the first rock shaft; a second link mechanism that includes a second rocking portion rockable about a second rock shaft and transmits an operating force of the hydraulic operation lever; and a second support portion that rockably supports the second rocking portion via the second rock shaft and is fixed to the first support portion.

According to one aspect of the present disclosure, the first support portion that supports the first link mechanism (first rocking portion) and the second support portion that supports the second link mechanism (second rocking portion) are fixed to each other, so that one member of the first support portion and the second support portion can be reinforced by the other member.

In one aspect of the present disclosure, the second support portion is fixed to a fender at a position lower than the second rock shaft, and is fixed to the first support portion at a position higher than the second rock shaft.

According to one aspect of the present disclosure, the first support portion can reinforce the second support portion in which the second rock shaft is provided at a position higher than the position of fixing to the fender.

In one aspect of the present disclosure, the first support portion is fixed to the fender at a position lower than the second rock shaft and at a position higher than the second rock shaft.

According to one aspect of the present disclosure, the second support portion can be reinforced more firmly by the first support portion fixed to the fender on both the upper side and the lower side of the second rock shaft.

In one aspect of the present disclosure, the first support portion is fixed to the fender at a position lower than the first rock shaft and at a position higher than the first rock shaft.

According to one aspect of the present disclosure, the second support portion can be reinforced more firmly by the first support portion fixed to the fender on both the upper side and the lower side of the first rock shaft.

In one aspect of the present disclosure, the first support portion rockably supports the position lever.

According to one aspect of the present disclosure, the structure can be simplified by the first support portion supporting not only the first link mechanism (first rocking portion) but also the position lever.

In one aspect of the present disclosure, the first link mechanism includes a horizontal link portion that is disposed with its longitudinal direction oriented in a substantially horizontal direction and connects the position lever and the first rocking portion.

According to one aspect of the present disclosure, use of the horizontal link portion can increase the degree of freedom in the position of the position lever in a horizontal direction.

### ADVANTAGEOUS EFFECTS OF INVENTION

According to one aspect of the present disclosure, operability of a position lever and hydraulic operation levers can be enhanced.

### BRIEF DESCRIPTION OF DRAWINGS

Fig. 1 is a left side view showing an overall configuration of a tractor according to one aspect of the present disclosure.
Fig. 2 is a plan view showing the vicinity of a right console inside a cabin.
Fig. 3 is a perspective view showing operation mechanisms provided along a fender.
Fig. 4 is a perspective view showing a loader operation mechanism.
Fig. 5 is a left side view showing the loader operation mechanism.
Fig. 6 is a right side view showing a closure mechanism.
Fig. 7 is an exploded perspective view showing the closure mechanism.
Fig. 8 is a perspective view showing a position operation mechanism and a hydraulic operation mechanism.
Fig. 9 is a partially exploded perspective view showing the position operation mechanism and the hydraulic operation mechanism.
Fig. 10 is a plan view showing the position operation mechanism and the hydraulic operation mechanism.
Fig. 11 is a left side view showing the position operation mechanism and the hydraulic operation mechanism.
Fig. 12 is a right side view showing the position operation mechanism and the hydraulic operation mechanism.

### DESCRIPTION OF EMBODIMENT

In the following, a description will be given with the directions indicated by arrows U, D, F, B, L, and R in the drawings defined as the upward direction, the downward direction, the forward direction, the rearward direction, the leftward direction, and the rightward direction, respectively. Note that the forward direction is the forward traveling direction of a tractor 1, and the rearward direction is the rearward traveling direction of the tractor 1.

First, an overall configuration of the tractor 1 according to one aspect of the present disclosure is described.

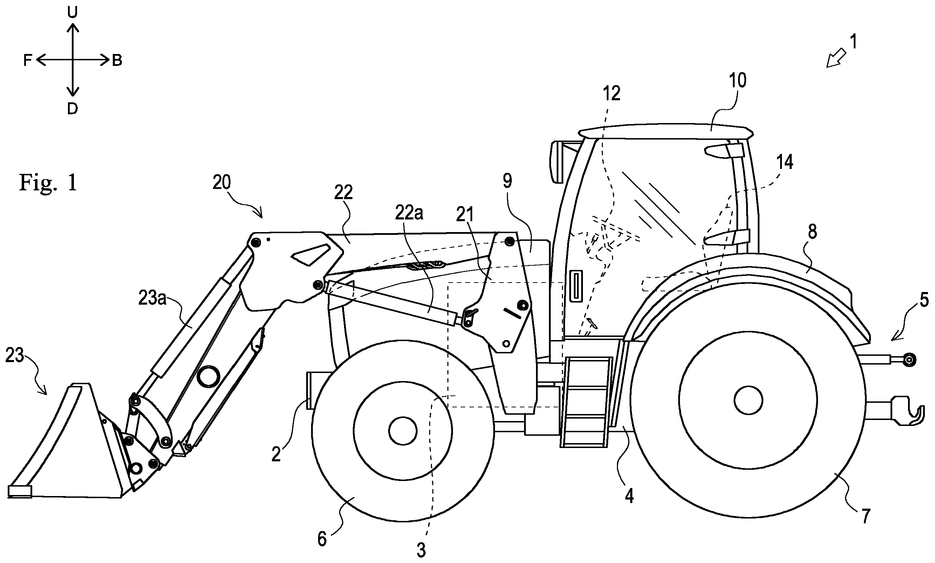

As shown in Fig. 1, the tractor 1 mainly includes a body frame 2, an engine 3, a transmission case 4, a lifting device 5, front wheels 6, rear wheels 7, a hood 9, a cabin 10, a steering wheel 12, and a front loader 20.

The body frame 2 is a frame-like member formed by appropriately combining a plurality of panel members. The body frame 2 is formed in a substantially rectangular shape in plan view. The body frame 2 is disposed with the longitudinal direction oriented in the front-rear direction. The engine 3 is fixed to a rear portion of the body frame 2. The transmission case 4 is fixed to a rear portion of the engine 3.

The lifting device 5 is provided at a rear portion of the transmission case 4. Various implements (for example, a cultivator and the like) can be mounted on the lifting device 5. The lifting device 5 can raise and lower a mounted implement with an actuator such as a hydraulic cylinder.

A front portion of the body frame 2 is supported by a pair of left and right front wheels 6 via a front axle mechanism (not shown). A rear portion of the transmission case 4 is supported by a pair of left and right rear wheels 7 via a rear axle mechanism (not shown). The pair of left and right rear wheels 7 are substantially covered from above by the fenders 8.

The engine 3 is covered with the hood 9. Power of the engine 3 is shifted by a transmission device (not shown) housed in the transmission case 4, and then can be transmitted to the front wheels 6 through the front axle mechanism and to the rear wheels 7 through the rear axle mechanism. The front wheels 6 and the rear wheels 7 are rotationally driven by the power of the engine 3, and thus, the tractor 1 can travel.

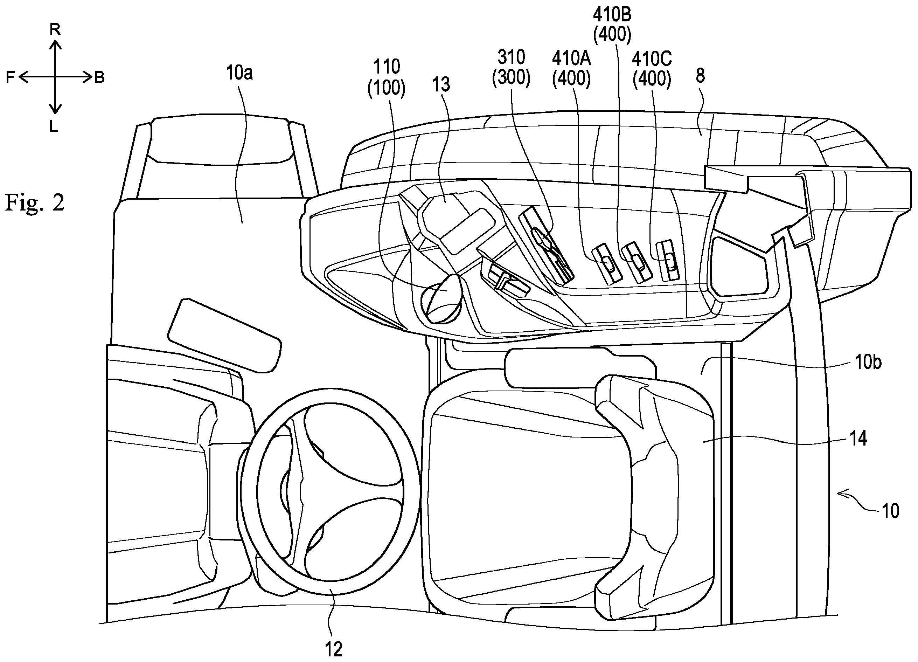

The cabin 10 is provided behind the engine 3. Inside the cabin 10, an operator space in which an operator is to sit is formed. In the operator space, as shown in Fig. 2, the steering wheel 12 for adjusting the steering angle of the front wheels 6, a right console 13 provided with various operating tools, a seat 14 on which the operator is to sit, and the like are disposed.

The floor surface of the cabin 10 includes a first floor surface 10a formed on the front side of the operator space, and a second floor surface 10b formed on the rear side of the operator space. The first floor surface 10a and the second floor surface 10b are formed to have a step-like shape, and the second floor surface 10b is formed at a position higher than the first floor surface 10a. The seat 14 is provided on the second floor surface 10b.

On the right console 13, operating tools (operation mechanisms) for performing various operations relating to movements of the tractor 1 are disposed. The right console 13 is formed in a shape elongated in the front-rear direction. The right console 13 is disposed on the right side in the cabin 10. More specifically, the right console 13 is disposed on the right side of the seat 14 and the steering wheel 12. The right console 13 is disposed so as to cover a laterally inner side surface of the right-side fender 8.

On the right console 13, for example, a loader lever 110 for operating the front loader 20, a position lever 310 for raising and lowering the lifting device 5, hydraulic operation levers 410A, 410B, and 410C to be used for controlling the hydraulic pressure for an implement mounted on the tractor 1, and the like are provided.

Note that the operating tools described above are merely examples, and various other operating tools are disposed on and around the right console 13. For example, an accelerator lever for adjusting the rotational speed of the engine 3, a tilling depth adjustment dial for adjusting the depth of tilling by a cultivator, an implement raise/lower switch for raising and lowering the lifting device 5 to a predetermined position, and the like may be provided.

Although any description thereof is not given in the present embodiment, various operating tools can also be disposed on a left console (not shown) provided on the left side of the seat 14.

As shown in Fig. 1, the front loader 20 is mounted on a front portion of the tractor 1. The front loader 20 includes side frames 21, a boom 22, and a bucket 23.

The side frames 21 are detachably provided on the vehicle body (the body frame 2 and the transmission case 4) of the tractor 1. The side frames 21 are provided on both the left and right sides of the vehicle body.

The boom 22 is rockably supported by each of the left and right side frames 21. The boom 22 is disposed so as to extend from upper portions of the side frames 21 toward the front lower side. A boom cylinder 22a is provided on the boom 22. The boom 22 can rock relative to the side frame 21 by extension and contraction of the boom cylinder 22a.

The bucket 23 is formed so as to be open forward. The bucket 23 is rockably connected to a front end portion of the boom 22. The bucket 23 can rock relative to the boom 22 by extension and contraction of a bucket cylinder 23a.

The operator can operate the front loader 20 by extending and contracting the boom cylinder 22a and the bucket cylinder 23a through rocking operations of the loader lever 110 in front-rear and left-right directions.

In the following, a description will be given of operation mechanisms (a loader operation mechanism 100, a position operation mechanism 300, and a hydraulic operation mechanism 400) provided on the right console 13.

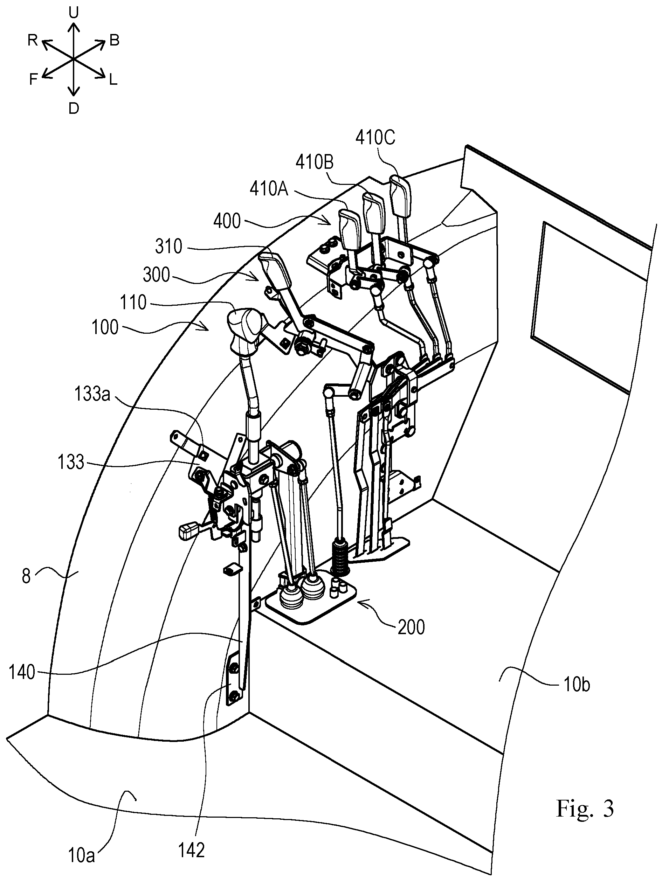

As shown in Figs. 2 and 3, the right console 13 is provided with the loader operation mechanism 100, the position operation mechanism 300, and the hydraulic operation mechanism 400. Note that, in Fig. 3, the right console 13 is not shown, for ease of explanation. The respective operation mechanisms are arranged along an inner side surface of the right-side fender 8. The loader operation mechanism 100, the position operation mechanism 300, and the hydraulic operation mechanism 400 are disposed so as to be aligned in the front-rear direction. Lower portions of the respective operation mechanisms are covered with the right console 13, and operating tools to be operated by the operator (the loader lever 110, the position lever 310, and the like, which will be described later) are disposed so as to project upward from the right console 13. Note that, in the drawings after Fig. 3, the right console 13 is not shown. In the following, the configurations of the respective operation mechanisms will be described in order.

First, the loader operation mechanism 100 shown in Figs. 3 to 5 is described. The loader operation mechanism 100 is for operating the front loader 20. The loader operation mechanism 100 mainly includes the loader lever 110, a first support portion 120, a second support portion 130, a third support portion 140, a lock mechanism 150, a link mechanism 160, and the like.

The loader lever 110 is an operating tool for the operator to operate the front loader 20. The loader lever 110 is formed in an elongated shape extending vertically. The loader lever 110 includes a connection block 111, a cylindrical portion 112, a front-rear rock shaft 113, and the like.

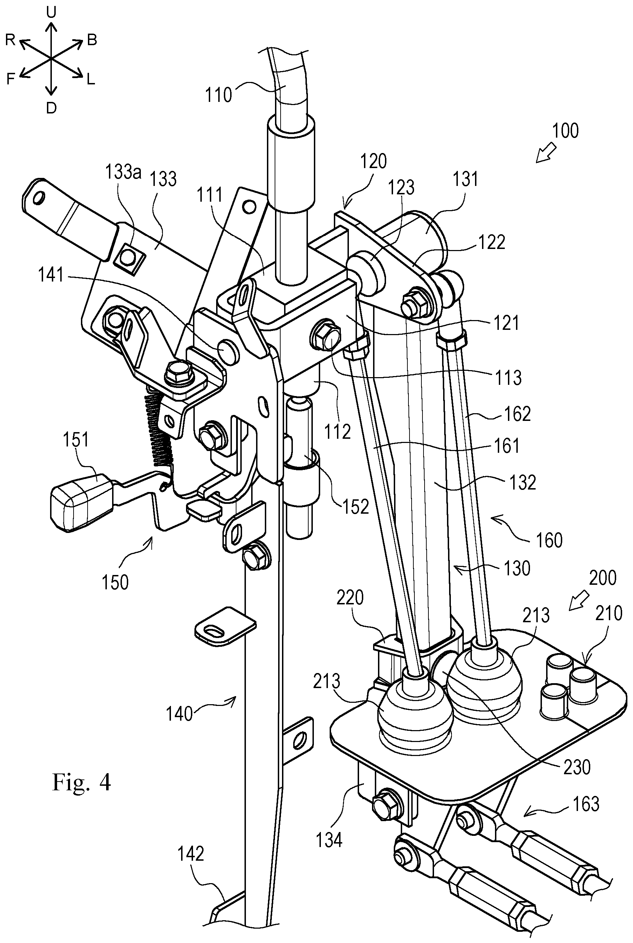

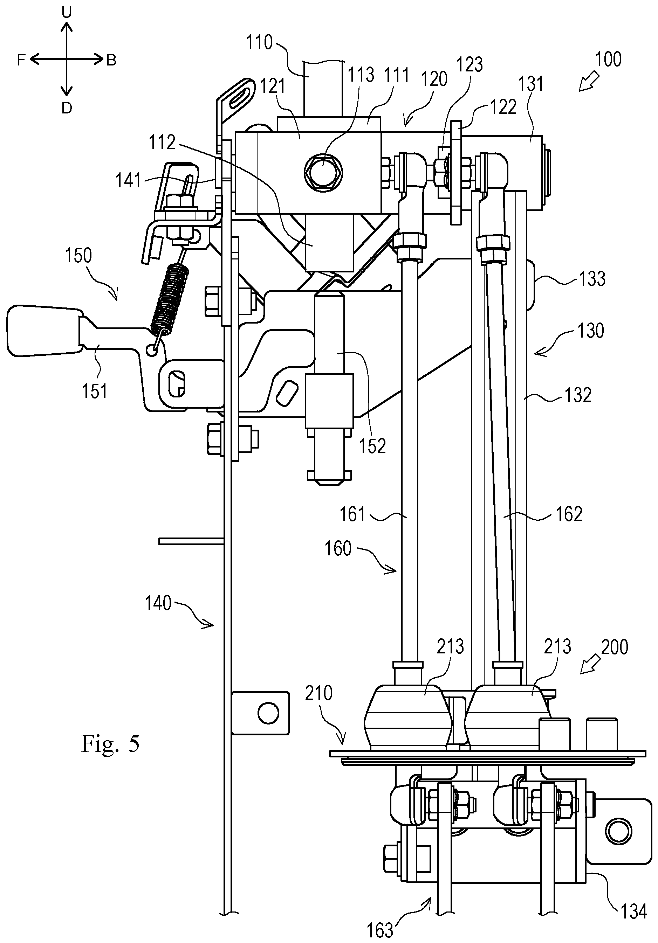

The connection block 111 shown in Figs. 4 and 5 is a member having a substantially rectangular parallelepiped shape. The connection block 111 is provided at a lower portion of the loader lever 110.

The cylindrical portion 112 is a portion that can engage with the lock mechanism 150 (insertion portion 152), which will be described later. The cylindrical portion 112 is formed in a cylindrical shape with an axis line oriented in the vertical direction. The cylindrical portion 112 is provided on the bottom surface of the connection block 111.

The front-rear rock shaft 113 serves as the center axis for rocking of the loader lever 110 in the front-rear direction. The front-rear rock shaft 113 is formed in a rod-like shape with an axis line oriented in the left-right direction. In the present embodiment, an example in which the front-rear rock shaft 113 is formed by a bolt is shown. The front-rear rock shaft 113 is provided so as to penetrate a rocking support portion 121, which will be described later, and the connection block 111 in the front-rear direction. Accordingly, the connection block 111 is supported so as to be rockable relative to the rocking support portion 121 in the front-rear direction.

The first support portion 120 is for supporting the loader lever 110 so as to be rockable in the front-rear direction. The first support portion 120 mainly includes the rocking support portion 121, a plate-like portion 122, a left-right rock shaft 123, and the like.

The rocking support portion 121 is a portion connected to the loader lever 110 through the front-rear rock shaft 113. The rocking support portion 121 is formed by appropriately bending a plate-like member. The rocking support portion 121 is formed in a substantially U-shape that is open rearward in plan view. The connection block 111 is disposed between a pair of left and right plate-like portions of the rocking support portion 121. In this state, the front-rear rock shaft 113 is provided so as to penetrate the rocking support portion 121 and the connection block 111 in the front-rear direction. In this manner, the rocking support portion 121 supports the loader lever 110 so as to be rockable in the front-rear direction. The rocking support portion 121 is also supported by the second support portion 130 (described later) so as to be rockable in the left-right direction.

The plate-like portion 122 is a portion to which the left-right rock shaft 123 (described later) is fixed. The plate-like portion 122 is formed in a flat plate-like shape with a plate surface oriented in the front-rear direction, and is fixed to a rear portion of the rocking support portion 121.

The left-right rock shaft 123 serves as the center axis for rocking of the loader lever 110 in the left-right direction. The left-right rock shaft 123 is formed in a cylindrical shape with the axis line oriented in the front-rear direction. The left-right rock shaft 123 is fixed to the plate-like portion 122 so as to project rearward from the plate-like portion 122. The axis line of the left-right rock shaft 123 is disposed so as to be orthogonal to the axis line of the front-rear rock shaft 113.

The second support portion 130 is for supporting the first support portion 120 so as to be rockable in the left-right direction. The second support portion 130 mainly includes a cylindrical portion 131, a reinforcement portion 132, an upper fixing portion 133, a lower fixing portion 134, and the like.

The cylindrical portion 131 is a portion that rotatably supports the left-right rock shaft 123. The cylindrical portion 131 is formed in a cylindrical shape with the axis line oriented in the front-rear direction. The left-right rock shaft 123 is inserted into the cylindrical portion 131 so as to be rotatable. The cylindrical portion 131 is fixed to an upper portion of the reinforcement portion 132, which will be described later.

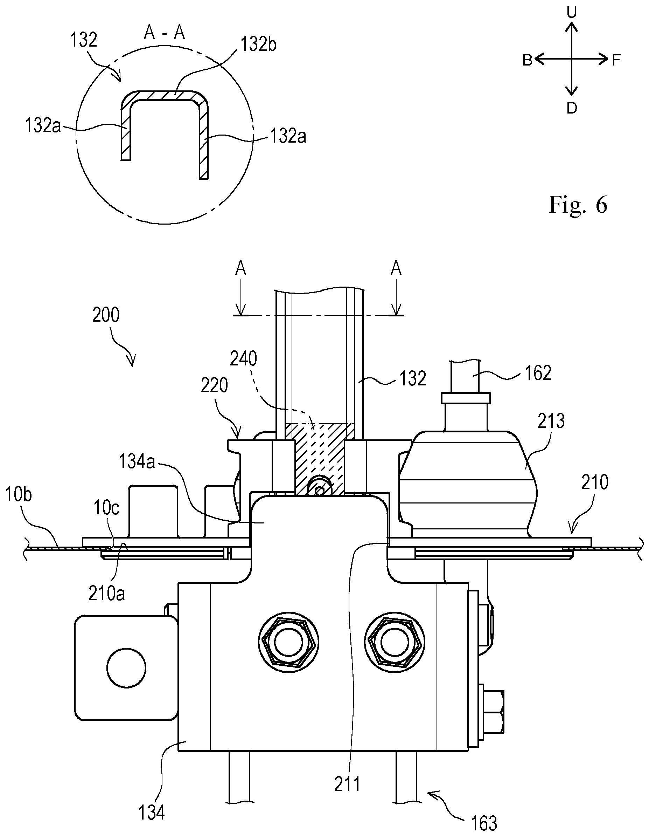

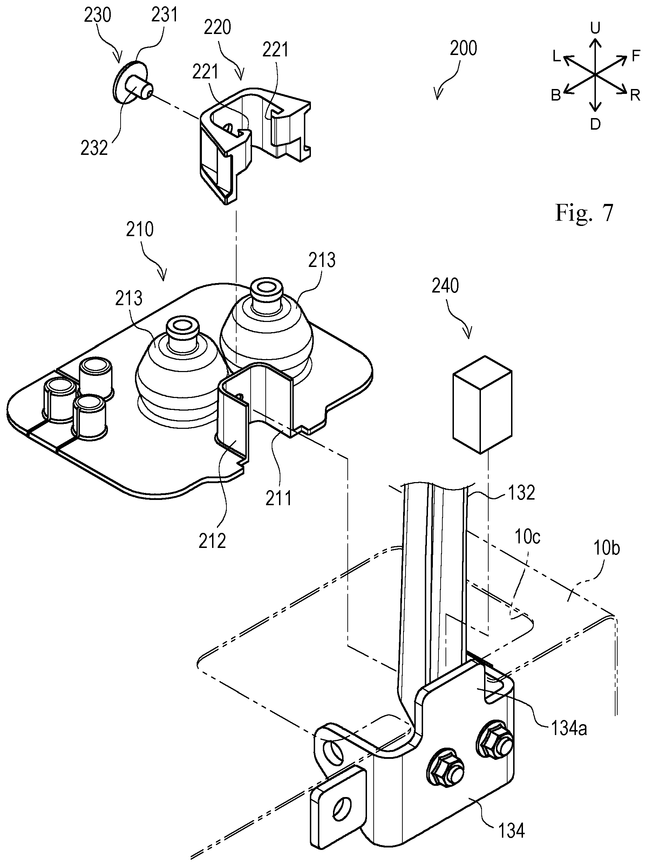

The reinforcement portion 132 shown in Figs. 4 to 7 is a portion for reinforcing the second support portion 130. The reinforcement portion 132 is formed in an elongated shape extending in the vertical direction. The reinforcement portion 132 is formed in a substantially U-shape that is open rightward in plan view, by bending both front and rear end portions of a plate-like member rightward. Specifically, as shown in Fig. 6, the reinforcement portion 132 includes a pair of front and rear first plate-like portions 132a facing each other, and a second plate-like portion 132b connecting left end portions of the first plate-like portions 132a. By forming the pair of first plate-like portions 132a extending in the left-right direction in this manner, lateral deflection of the reinforcement portion 132 can be suppressed. The reinforcement portion 132 is disposed so as to extend from above to below the second floor surface 10b through an opening 10c (see Fig. 7) formed at a right end portion of the floor surface (second floor surface 10b) of the cabin 10.

The upper fixing portion 133 shown in Figs. 4 and 5 is a portion for fixing an upper portion of the second support portion 130 to the fender 8. The upper fixing portion 133 is formed by appropriately combining suitable members (a plurality of plate- like members and the like). The upper fixing portion 133 is fixed to the right side surface of an upper end portion of the reinforcement portion 132. A nut 133a is fixed to the upper fixing portion 133. The nut 133a is disposed at substantially the same position as the cylindrical portion 131 in the vertical direction. The upper fixing portion 133 is fixed to the fender 8 (see Fig. 3) by fastening a bolt (not shown) to the nut 133a from the outer side surface (right side surface) of the fender 8.

The lower fixing portion 134 shown in Figs. 4 to 7 is a portion for fixing a lower portion of the second support portion 130 to the fender 8. The lower fixing portion 134 is formed in a substantially U-shape that is open leftward in plan view, by bending a plate-like member. The lower fixing portion 134 is disposed directly below the second floor surface 10b of the cabin 10. At an upper portion of the right side surface of the lower fixing portion 134, a projecting portion 134a projecting upward is formed. A lower end portion of the reinforcement portion 132 is fixed to an inner side surface (left side surface) of the projecting portion 134a. The right side surface of the lower fixing portion 134 is fixed to the fender 8 by suitable fastening members (a bolt, a nut, and the like).

The third support portion 140 shown in Figs. 4 and 5 is for supporting the first support portion 120 so as to be rockable in the left-right direction together with the second support portion 130. The third support portion 140 is formed by a vertically long plate-like member with a plate surface oriented in the front-rear direction. The third support portion 140 includes a rock shaft 141, a fixing portion 142, and the like.

The rock shaft 141 serves as the center axis for rocking of the loader lever 110 in the left-right direction. The rock shaft 141 is formed in a cylindrical shape with the axis line oriented in the front-rear direction. The rock shaft 141 is disposed on the same axis line as the left-right rock shaft 123 of the first support portion 120. The rock shaft 141 is fixed to the third support portion 140 so as to project rearward from an upper portion of the third support portion 140. A rear portion of the rock shaft 141 is inserted through the front surface of the rocking support portion 121 of the first support portion 120 so as to be relatively rotatable.

The fixing portion 142 shown in Figs. 3 and 4 is a portion for fixing a lower portion of the third support portion 140 to the fender 8. The fixing portion 142 is formed in a plate-like shape with a plate surface oriented in the left-right direction. The fixing portion 142 is fixed to a lower portion of the third support portion 140. The fixing portion 142 is fixed to the fender 8 by suitable fastening members (a bolt, a nut, and the like).

The lock mechanism 150 shown in Figs. 4 and 5 is for restricting rocking of the loader lever 110. The lock mechanism 150 includes a lever 151, an insertion portion 152, and the like.

The lever 151 is an operating tool for restricting rocking of the loader lever 110. The lever 151 is disposed so as to project forward of the third support portion 140.

The insertion portion 152 is a portion inserted into the cylindrical portion 112 of the loader lever 110. The insertion portion 152 is formed in a cylindrical shape having an outer diameter smaller than the inner diameter of the cylindrical portion 112. The insertion portion 152 is disposed below the cylindrical portion 112 in a state in which the axis line is oriented in the vertical direction. A rear end portion of the lever 151 is fixed to the insertion portion 152.

As the lever 151 is operated, and an upper portion of the insertion portion 152 is inserted into a lower portion of the cylindrical portion 112, rocking of the cylindrical portion 112 can be restricted. In this manner, use of the lock mechanism 150 can restrict rocking of the loader lever 110 as necessary.

The link mechanism 160 is for transmitting an operating force of the loader lever 110. The link mechanism 160 mainly includes a first rod 161, a second rod 162, a lower link 163, and the like.

The first rod 161 is for transmitting a rocking operation of the loader lever 110 in the front-rear direction. The first rod 161 is formed in a rod-like shape with the longitudinal direction oriented in the vertical direction. The upper end of the first rod 161 is connected to the rear side surface of the connection block 111 of the loader lever 110 (on the rear side of the front-rear rock shaft 113). A lower portion of the first rod 161 extends below the second floor surface 10b through the opening 10c (see Fig. 7) of the floor surface (second floor surface 10b) of the cabin 10. Note that, in Fig. 7, the link mechanism 160 (the first rod 161, the second rod 162, and the like) is not shown.

The second rod 162 is for transmitting a rocking operation of the loader lever 110 in the left-right direction. The second rod 162 is formed in a rod-like shape with the longitudinal direction oriented in the vertical direction. The upper end of the second rod 162 is connected to a left end portion of the plate-like portion 122 of the first support portion 120 (on the left side of the left-right rock shaft 123). A lower portion of the second rod 162 extends below the second floor surface 10b through the opening 10c (see Fig. 7) of the floor surface (second floor surface 10b) of the cabin 10.

The lower link 163 transmits operations of the first rod 161 and the second rod 162. The lower link 163 is formed with a plurality of link members. The lower link 163 is connected to a control valve (not shown) that controls feed of operating oil to the front loader 20.

Rocking operations of the loader lever 110 in the front-rear and left-right directions are transmitted to the control valve (not shown) through the link mechanism 160, so that the control valve can be operated. As the control valve is operated, feed of operating oil to the boom cylinder 22a and the bucket cylinder 23a of the front loader 20 is controlled, and the front loader 20 can be operated as desired.

Here, as described above, to extend part of the loader operation mechanism 100 (the reinforcement portion 132 and the like) downward of the cabin 10, the opening 10c is formed in the second floor surface 10b of the cabin 10. Therefore, there is a possibility that noise outside the cabin 10 will be transmitted into the operator space of the cabin 10 through the opening 10c. To counter this, in the present embodiment, a closure mechanism 200 for closing the opening 10c is provided to prevent transmission of noise into the cabin 10. In the following, the closure mechanism 200 will be described.

The closure mechanism 200 shown in Figs. 4 to 7 mainly includes a closure member 210, a pressing member 220, a fixing member 230, a blocking member 240, and the like.

The closure member 210 is for blocking communication between spaces above and below the second floor surface 10b through the opening 10c by closing the opening 10c. The closure member 210 is formed of a flexible material (for example, rubber or the like). The closure member 210 is formed in a plate-like shape having an outer shape corresponding to the shape of the opening 10c (in the present embodiment, a substantially rectangular shape). By fitting a groove portion 210a (see Fig. 6) formed in the outer periphery of the closure member 210 into the opening 10c of the second floor surface 10b, the closure member 210 can be attached to the opening 10c. The closure member 210 includes a cut-away portion 211, an upright portion 212, bulging portions 213, and the like.

The cut-away portion 211 shown in Fig. 7 is a portion formed by cutting away a portion of the closure member 210. The cut-away portion 211 is formed at the portion corresponding to the reinforcement portion 132. Specifically, the cut-away portion 211 is formed at a right end portion of the closure member 210. The cut-away portion 211 is formed in a shape corresponding to the outer shape (substantially rectangular shape) of the reinforcement portion 132 in plan view. The reinforcement portion 132 is disposed so as to extend above and below the second floor surface 10b through the cut-away portion 211.

The upright portion 212 is a portion formed so as to stand upward from around the cut-away portion 211. The upright portion 212 is formed so as to surround the cut-away portion 211 from the front, rear, and left sides. As the upright portion 212 can surround the reinforcement portion 132 disposed so as to extend through the cut-away portion 211 from the sides, the gap between the cut-away portion 211 and the reinforcement portion 132 can be made smaller.

The bulging portions 213 shown in Figs. 4 to 7 are portions formed so that part of the closure member 210 bulges upward. The bulging portions 213 are formed at positions corresponding to the link mechanism 160 (the first rod 161 and the second rod 162) extending through the opening 10c. Two bulging portions 213 are formed to correspond to the first rod 161 and the second rod 162. Through-holes through which the first rod 161 and the second rod 162 can extend are formed in upper portions of the bulging portions 213. Through the through-holes, the first rod 161 and the second rod 162 are disposed so as to extend above and below the second floor surface 10b. The bulging portions 213 can be appropriately elastically deformed depending on movements of the first rod 161 and the second rod 162, and therefore, movements of the first rod 161 and the second rod 162 are not hindered.

The pressing member 220 shown in Figs. 4, 6, and 7 is for pressing the upright portion 212 against the reinforcement portion 132. The pressing member 220 is formed of a flexible material (for example, rubber or the like). The pressing member 220 is formed in a substantially U-shape that is open rightward in plan view. The pressing member 220 is fitted to the upright portion 212 from the left side so as to surround the upright portion 212 from outside. A pair of front and rear claw portions 221 are formed at right end portions of the pressing member 220. As the claw portions 221 are engaged with the right end portions of the reinforcement portion 132, the pressing member 220 can be attached to the reinforcement portion 132.

The fixing member 230 is for fixing the pressing member 220 and the upright portion 212 to the reinforcement portion 132. The fixing member 230 is formed by a fastening member such as a screw having a head portion 231 and a shaft portion 232, for example. The shaft portion 232 of the fixing member 230 is inserted from the left through the pressing member 220, the upright portion 212, and the reinforcement portion 132, and is engaged with the reinforcement portion 132. The fixing member 230 can press the pressing member 220 and the upright portion 212 toward the reinforcement portion 132 with the head portion 231.

The blocking member 240 shown in Figs. 6 and 7 is disposed on the inner side of the reinforcement portion 132, and blocks communication between the spaces above and below the second floor surface 10b through the inside of the reinforcement portion 132. The blocking member 240 is formed of a flexible material (for example, sponge or the like). The blocking member 240 is formed in a shape (rectangular parallelepiped shape) corresponding to the space on the inner side of the reinforcement portion 132. The blocking member 240 is disposed on the inner side of the reinforcement portion 132 in a state compressed by the reinforcement portion 132. The blocking member 240 is disposed such that at least a portion thereof overlaps (so as to be at the same height as) the upright portion 212 of the closure member 210 in the vertical direction. Moreover, the blocking member 240 is disposed such that at least a portion thereof overlaps the projecting portion 134a of the lower fixing portion 134 in the vertical direction. In this manner, the blocking member 240 is disposed so as to be surrounded from the side by the reinforcement portion 132 and the projecting portion 134a. Further, the blocking member 240 is pressed and held from the right by the claw portions 221 of the pressing member 220 attached to the reinforcement portion 132.

The closure mechanism 200 designed as described above can suppress transmission of noise into the cabin 10 through the opening 10c formed in the second floor surface 10b. Specifically, the opening 10c is closed with the closure member 210, so that transmission of noise can be suppressed. In addition, because the upright portion 212, the pressing member 220, and the fixing member 230 can reduce the gap between the closure member 210 and the reinforcement portion 132, transmission of noise can be suppressed more effectively. Furthermore, because the blocking member 240 can also close the space on the inner side of the reinforcement portion 132, transmission of noise can be suppressed more effectively.

As described above, the tractor 1 (working vehicle) according to the present embodiment includes:
the first support portion 120 that supports the loader lever 110 so as to be rockable in the front-rear direction; and
the second support portion 130 that supports the first support portion 120 so as to be rockable in the left-right direction, and
the second support portion 130 includes
the reinforcement portion 132 that is formed in a U-shape in cross-sectional view, and includes the pair of first plate-like portions 132a extending in the left-right direction and the second plate-like portion 132b connecting the pair of first plate-like portions 132a.

With such a configuration, the loader lever 110 can be stably supported. That is, the pair of first plate-like portions 132a extending in the left-right direction can suppress lateral deflection of the second support portion 130.

Further, the reinforcement portion 132
is disposed so as to penetrate the floor surface vertically through the opening 10c formed in the floor surface (second floor surface 10b) of the cabin 10, and
further includes the closure member 210 disposed so as to close the opening 10c through which the reinforcement portion 132 is inserted.

With such a configuration, transmission of noise upward (into the cabin 10) through the opening 10c can be suppressed.

Further, the closure member 210 includes
the upright portion 212 standing so as to surround the reinforcement portion 132 from the side.

With such a configuration, the gap between the reinforcement portion 132 and the closure member 210 can be reduced, and transmission of noise can be suppressed more effectively.

In addition, the tractor 1 further includes
the pressing member 220 provided so as to press the upright portion 212 against the reinforcement portion 132.

With such a configuration, the gap between the reinforcement portion 132 and the closure member 210 can be reduced, and transmission of noise can be suppressed more effectively.

Also, the tractor 1 further includes
the fixing member 230 for fixing the pressing member 220 and the upright portion 212 to the reinforcement portion 132.

With such a configuration, the gap between the reinforcement portion 132 and the closure member 210 can be reduced, and transmission of noise can be suppressed more effectively.

In addition, the tractor 1
further includes the blocking member 240 that is disposed on the inner side of the reinforcement portion 132 and blocks communication between spaces above and below the floor surface through the inside of the reinforcement portion 132, and
the blocking member 240
is disposed such that, in the vertical direction, at least a portion thereof overlaps the upright portion 212.

With such a configuration, transmission of noise upward (into the cabin 10) through the space on the inner side of the reinforcement portion 132 can be suppressed. In particular, the blocking member 240 is disposed at the same height as the upright portion 212, so that transmission of noise can be effectively suppressed at the height position of the blocking member 240.

Furthermore, the tractor 1 further includes
the blocking member 240 that is disposed on the inner side of the reinforcement portion 132 and blocks communication between spaces above and below the floor surface through the inside of the reinforcement portion 132.

With such a configuration, transmission of noise upward (into the cabin 10) through the space inside the reinforcement portion 132 can be suppressed.

Further, the second support portion 130
is fixed to a fender 8 at a position (lower fixing portion 134) lower than the left-right rock shaft 123 (rock shaft) that rockably supports the first support portion 120.

With such a configuration, even when the left-right rock shaft 123 is provided at a position relatively distant from the fixing position, the reinforcement portion 132 can suppress lateral deflection of the second support portion 130.

Note that the left-right rock shaft 123 according to the present embodiment is one embodiment of a rock shaft according to the present invention.

Note that a specific configuration (shapes, positions, fixing methods, and the like of the respective portions) of the loader operation mechanism 100 (the first support portion 120, the second support portion 130, and the like) is not limited to the above embodiment, and can be changed as appropriate.

Also, a specific configuration of the closure mechanism 200 is not limited to the above embodiment, and can be changed as appropriate. For example, the closure mechanism 200 can be formed in any shape depending on the shape of the opening 10c formed in the floor surface (second floor surface 10b) of the cabin 10.

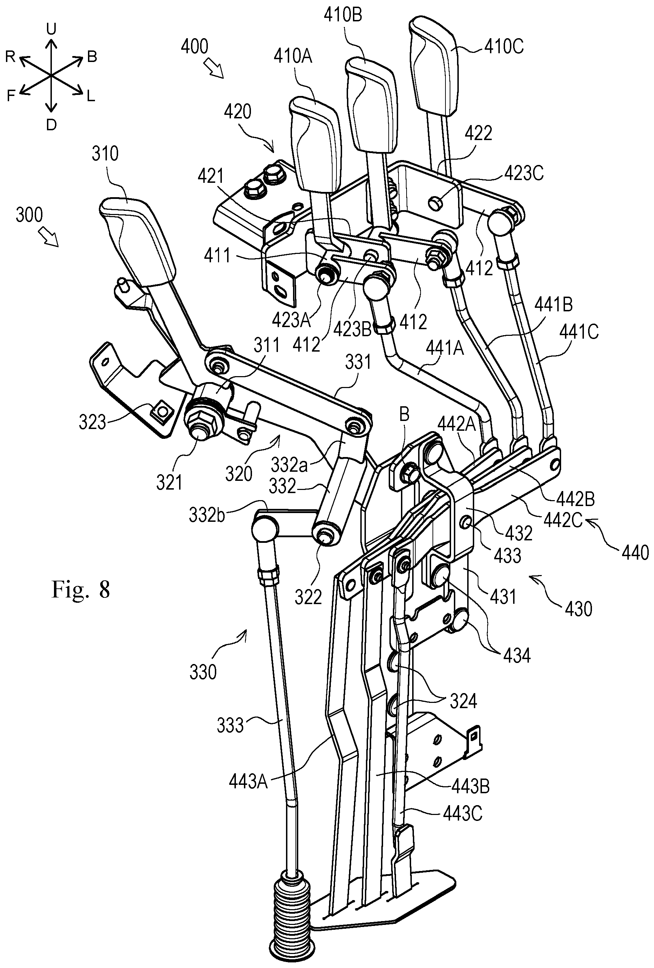

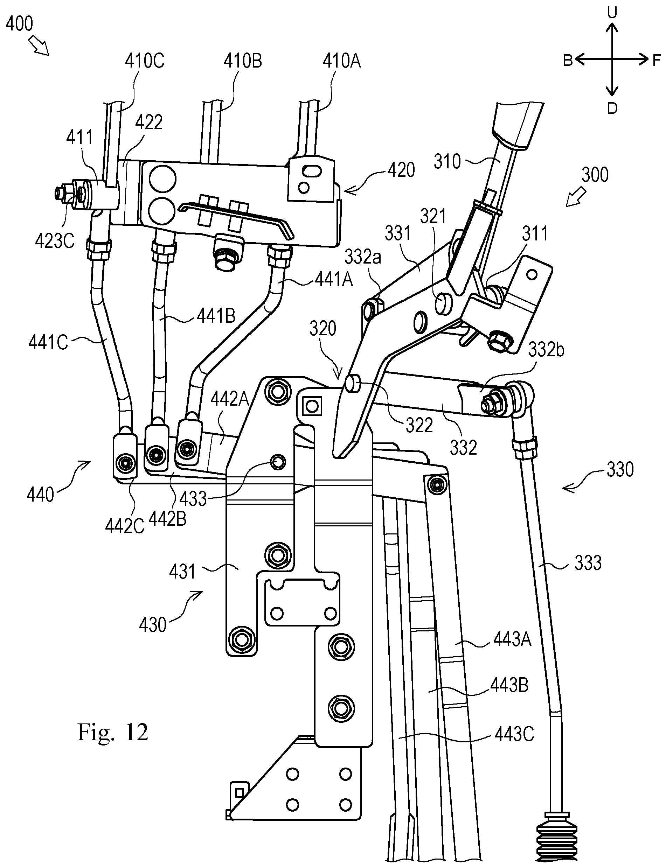

Next, the position operation mechanism 300 and the hydraulic operation mechanism 400 shown in Figs. 8 to 12 will be described.

The position operation mechanism 300 is for raising and lowering the lifting device 5. The position operation mechanism 300 mainly includes the position lever 310, a first support portion 320, a first link mechanism 330, and the like.

The position lever 310 shown in Fig. 8 and Figs. 10 to 12 is an operating tool for the operator to operate the lifting device 5. The position lever 310 is formed in an elongated shape extending vertically. The position lever 310 includes a cylindrical portion 311 and the like.

The cylindrical portion 311 is a portion formed in a cylindrical shape. The cylindrical portion 311 is fixed to a lower portion of the position lever 310. The cylindrical portion 311 is disposed with the axis line oriented in a substantially front-rear direction.

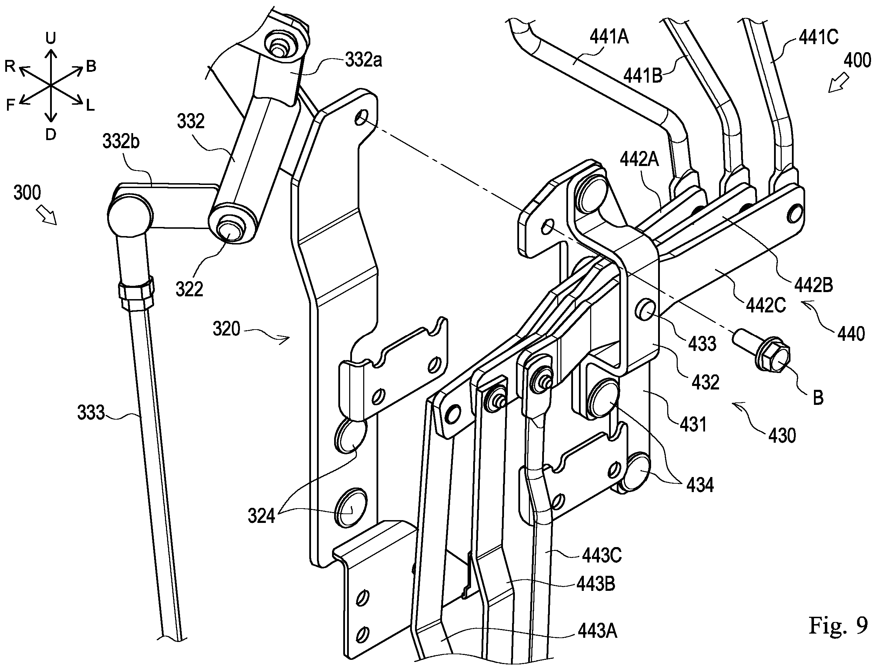

The first support portion 320 shown in Figs. 8 and 9 rockably supports the first link mechanism 330 (described later) and the like. The first support portion 320 is formed by appropriately combining suitable members (a plurality of plate-like members and the like). The first support portion 320 is formed in an elongated shape long in the vertical direction. An upper portion of the first support portion 320 is formed so as to project rightward relative to a lower portion. The first support portion 320 includes a lever rock shaft 321, a first rock shaft 322, a nut 323, bolts 324, and the like.

The lever rock shaft 321 shown in Figs. 8, 10, and 11 serves as the center axis for rocking of the position lever 310. The lever rock shaft 321 is formed in a cylindrical shape with an axis line Xp oriented in a substantially front-rear direction. The lever rock shaft 321 is fixed to an upper portion of the first support portion 320. The lever rock shaft 321 is disposed so as to project forward from the first support portion 320. The lever rock shaft 321 is inserted into the cylindrical portion 311 of the position lever 310. Accordingly, the position lever 310 is supported so as to be rockable relative to the lever rock shaft 321.

The first rock shaft 322 serves as the center axis for rocking of a first rocking portion 332 of the first link mechanism 330, which will be described later. The first rock shaft 322 is formed in a cylindrical shape with the axis line oriented in a substantially front-rear direction (parallel to the lever rock shaft 321). The first rock shaft 322 is fixed to the first support portion 320 at a middle portion in the vertical direction. More specifically, the first rock shaft 322 is disposed at a position that is laterally inward (on the left side) of the lever rock shaft 321 and is lower than the lever rock shaft 321. The first rock shaft 322 is disposed so as to project forward from the first support portion 320.

The nut 323 shown in Fig. 8 is fixed to an upper portion of the first support portion 320 (at a position higher than the first rock shaft 322 and a second rock shaft 433 that will be described later). The first support portion 320 is fixed to the fender 8 by fastening a bolt (not shown) to the nut 323 from the outer side surface (right side surface) of the fender 8.

The bolts 324 shown in Figs. 8 and 9 are fixed to lower portions of the first support portion 320 (at positions lower than the first rock shaft 322 and the second rock shaft 433, which will be described later). The shaft portions (not shown) of the bolts 324 are provided so as to project outward (rightward) from the first support portion 320, and are inserted through the fender 8 (see Fig. 3). Nuts (not shown) are fastened to the bolts 324 from the outer side (right side surface) of the fender 8, and thus, the first support portion 320 is fixed to the fender 8.

The first link mechanism 330 shown in Figs. 8 to 11 is for transmitting an operating force of the position lever 310. The first link mechanism 330 mainly includes a horizontal link portion 331, the first rocking portion 332, a rod 333, and the like.

The horizontal link portion 331 connects the position lever 310 and the first rocking portion 332, which will be described later. The horizontal link portion 331 is formed in a flat plate-like shape. The horizontal link portion 331 is disposed with its longitudinal direction oriented in a substantially horizontal direction. Note that, in the present embodiment, "substantially horizontal" means that the angle formed by the longitudinal direction with respect to a horizontal plane is 45 degrees or smaller. The angle formed by the horizontal link portion 331 with respect to the horizontal plane is preferably closer to 0 degrees. The horizontal link portion 331 is disposed so as to extend in a substantially left-right direction. A right end portion of the horizontal link portion 331 is connected to the position lever 310. A left end portion of the horizontal link portion 331 is connected to the first rocking portion 332, which will be described later.

The first rocking portion 332 is a member that rocks depending on operations of the position lever 310. The first rocking portion 332 is formed in a substantially cylindrical shape. The first rock shaft 322 is inserted into the first rocking portion 332. Accordingly, the first rocking portion 332 is supported so as to be rockable relative to the first rock shaft 322. The first rocking portion 332 includes a first arm portion 332a, a second arm portion 332b, and the like.

The first arm portion 332a is a portion to which the horizontal link portion 331 is connected. The first arm portion 332a is formed so as to project substantially upward from a rear end portion of the first rocking portion 332.

The second arm portion 332b is a portion to which the rod 333, which will be described later, is connected. The second arm portion 332b is formed so as to project substantially rightward from a front end portion of the first rocking portion 332.

The rod 333 is formed in a rod-like shape with its longitudinal direction oriented in the vertical direction. An upper end portion of the rod 333 is connected to the second arm portion 332b. A lower end portion of the rod 333 is connected to a control valve (not shown) through a suitable link mechanism (not shown). As the control valve is operated through an operation of the position lever 310, feed of operating oil to the lifting device 5 is controlled, and the lifting device 5 can be raised and lowered as desired.

The hydraulic operation mechanism 400 shown in Figs. 8 to 12 is for controlling feed of hydraulic pressure to various implements provided on the tractor 1. The hydraulic operation mechanism 400 mainly includes hydraulic operation levers (a first hydraulic operation lever 410A, a second hydraulic operation lever 410B, and a third hydraulic operation lever 410C), a lever support portion 420, a second support portion 430, a second link mechanism 440, and the like.

Note that the present embodiment shows an example in which three hydraulic operation levers (the first hydraulic operation lever 410A, the second hydraulic operation lever 410B, and the third hydraulic operation lever 410C) are provided. Accordingly, three different hydraulic devices can be operated independently.

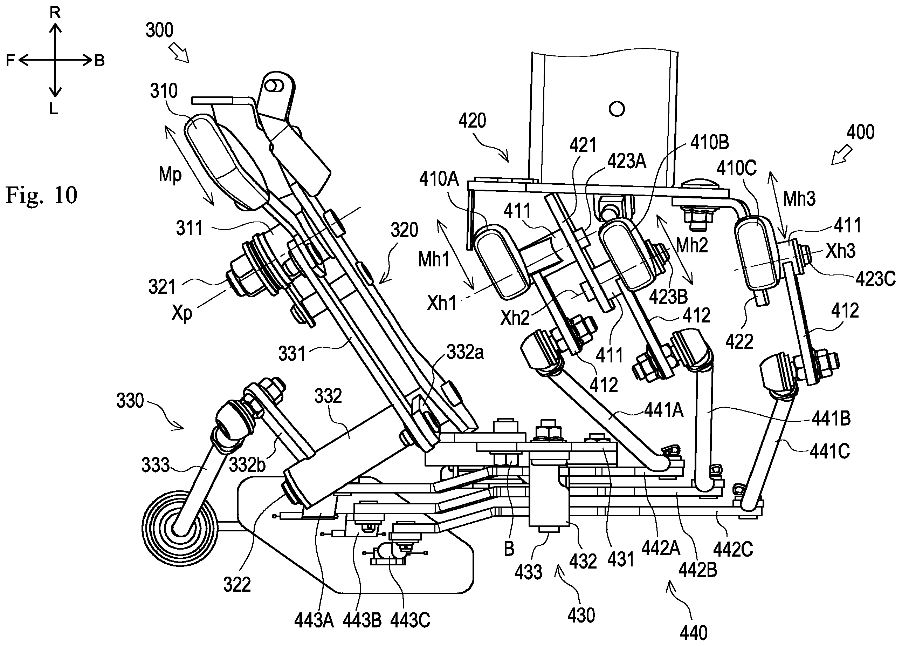

The first hydraulic operation lever 410A shown in Figs. 8 and 10 is an operating tool for the operator to operate an implement actuated by hydraulic pressure. The first hydraulic operation lever 410A is formed in an elongated shape extending vertically. The first hydraulic operation lever 410A is rockably supported by the lever support portion 420, which will be described later. The first hydraulic operation lever 410A includes a cylindrical portion 411, an arm portion 412, and the like.

The cylindrical portion 411 is a portion formed in a cylindrical shape. The cylindrical portion 411 is fixed to a lower portion of the first hydraulic operation lever 410A. The cylindrical portion 411 is disposed with the axis line oriented in a substantially front-rear direction.

The arm portion 412 is a portion to which an upper link portion 441A, which will be described later, is connected. The arm portion 412 is formed so as to project substantially leftward from the cylindrical portion 411.

Although a detailed description is not given herein, the second hydraulic operation lever 410B and the third hydraulic operation lever 410C are formed substantially similarly to the first hydraulic operation lever 410A. The second hydraulic operation lever 410B and the third hydraulic operation lever 410C, like the first hydraulic operation lever 410A, include a cylindrical portion 411 and an arm portion 412.

The first hydraulic operation lever 410A, the second hydraulic operation lever 410B, and the third hydraulic operation lever 410C are disposed behind the position lever 310 so as to be aligned in the front-rear direction.

The lever support portion 420 shown in Figs. 8 and 10 rockably supports the hydraulic operation levers. The lever support portion 420 is formed by appropriately combining suitable members (a plurality of plate-like members and the like). The lever support portion 420 includes a front support plate 421, a rear support plate 422, and the like.

The front support plate 421 is a portion that supports the first hydraulic operation lever 410A and the second hydraulic operation lever 410B. The front support plate 421 is disposed in a state in which a plate surface is oriented in a substantially front-rear direction. The front support plate 421 is provided with a first lever rock shaft 423A and a second lever rock shaft 423B.

The first lever rock shaft 423A serves as the center axis for rocking of the first hydraulic operation lever 410A. The first lever rock shaft 423A is formed in a cylindrical shape with an axis line Xh1 oriented in a substantially front-rear direction. The first lever rock shaft 423A is disposed so as to project forward from the front support plate 421. The first lever rock shaft 423A is inserted into the cylindrical portion 411 of the first hydraulic operation lever 410A. Accordingly, the first hydraulic operation lever 410A is supported so as to be rockable relative to the first lever rock shaft 423A.

The second lever rock shaft 423B serves as the center axis for rocking of the second hydraulic operation lever 410B. The second lever rock shaft 423B is formed in a cylindrical shape with an axis line Xh2 oriented in a substantially front-rear direction. Note that, in the present embodiment, the axis line Xh2 of the second lever rock shaft 423B is disposed so as to be parallel to the axis line Xh1 of the first lever rock shaft 423A. The second lever rock shaft 423B is disposed so as to project rearward from the front support plate 421. The second lever rock shaft 423B is inserted into the cylindrical portion 411 of the second hydraulic operation lever 410B. Accordingly, the second hydraulic operation lever 410B is supported so as to be rockable relative to the second lever rock shaft 423B.

The rear support plate 422 is a portion that supports the third hydraulic operation lever 410C. The rear support plate 422 is disposed behind the front support plate 421 in a state in which a plate surface is oriented in a substantially front-rear direction. The rear support plate 422 is provided with a third lever rock shaft 423C.

The third lever rock shaft 423C serves as the center axis for rocking of the third hydraulic operation lever 410C. The third lever rock shaft 423C is formed in a cylindrical shape with an axis line Xh3 oriented in a substantially front-rear direction. The third lever rock shaft 423C is disposed so as to project rearward from the rear support plate 422. The third lever rock shaft 423C is inserted into the cylindrical portion 411 of the third hydraulic operation lever 410C. Accordingly, the third hydraulic operation lever 410C is supported so as to be rockable relative to the third lever rock shaft 423C.

Here, rocking directions (operating directions) of the position lever 310 and the three hydraulic operation levers are specifically described.

As shown in Fig. 10, in plan view, the direction of the axis line Xp of the rock shaft of the position lever 310, the directions of the axis lines Xh1 and Xh2 of the rock shafts of the first hydraulic operation lever 410A and the second hydraulic operation lever 410B, and the direction of the axis line Xh3 of the rock shaft of the third hydraulic operation lever 410C are different from one another. Specifically, the axis lines Xh1 and Xh2 of the rock shafts of the first hydraulic operation lever 410A and the second hydraulic operation lever 410B are set such that the angle with respect to the front-rear direction is smaller than the angle of the axis line Xp of the rock shaft of the position lever 310 disposed on the front side. Accordingly, operating directions (rocking directions) Mh1 and Mh2 of the first hydraulic operation lever 410A and the second hydraulic operation lever 410B in plan view are set such that the angles with respect to the front-rear direction are greater than the angle of an operating direction Mp of the position lever 310. In other words, the operating directions Mh1 and Mh2 of the first hydraulic operation lever 410A and the second hydraulic operation lever 410B disposed on the rear side are set so as to be oriented more outward than the operating direction Mp of the position lever 310 disposed on the front side.

Further, the axis line Xh3 of the rock shaft of the third hydraulic operation lever 410C is set such that the angle with respect to the front-rear direction is smaller than the angles of the axis lines Xh1 and Xh2 of the rock shafts of the first hydraulic operation lever 410A and the second hydraulic operation lever 410B disposed on the front side. Accordingly, the operating direction (rocking direction) Mh3 of the third hydraulic operation lever 410C in plan view is set such that the angle with respect to the front-rear direction is greater than the angles of the operating directions Mh1 and Mh2 of the first hydraulic operation lever 410A and the second hydraulic operation lever 410B. In other words, the operating direction Mh3 of the third hydraulic operation lever 410C disposed on the rear side is set so as to be oriented more outward than the operating directions Mh1 and Mh2 of the first hydraulic operation lever 410A and the second hydraulic operation lever 410B disposed on the front side.

In this manner, in the present embodiment, relative to the operating directions of the levers disposed on the front side, the operating direction of the lever disposed on the rear side is set so as to be parallel or oriented outward ( the angle with respect to the front-rear direction is greater). With such a configuration, the operating directions of the levers can be set in a substantially radial manner centered on an arm (near the elbow) of the operator seated in the seat 14, and thus, operability of the respective levers can be enhanced.

The second support portion 430 shown in Figs. 8, 9, 11, and 12 rockably supports the second link mechanism 440, which will be described later. The second support portion 430 mainly includes a first support plate 431, a second support plate 432, a second rock shaft 433, bolts 434, and the like.

The first support plate 431 shown in Figs. 9, 11, and 12 is a portion that supports one end (right end) of the second rock shaft 433, which will be described later. The first support plate 431 is formed in an elongated shape long in the vertical direction. The first support plate 431 is formed in a flat plate-like shape, and is disposed with a plate surface oriented in the left-right direction. The first support plate 431 is disposed at a position lower than the lever support portion 420.

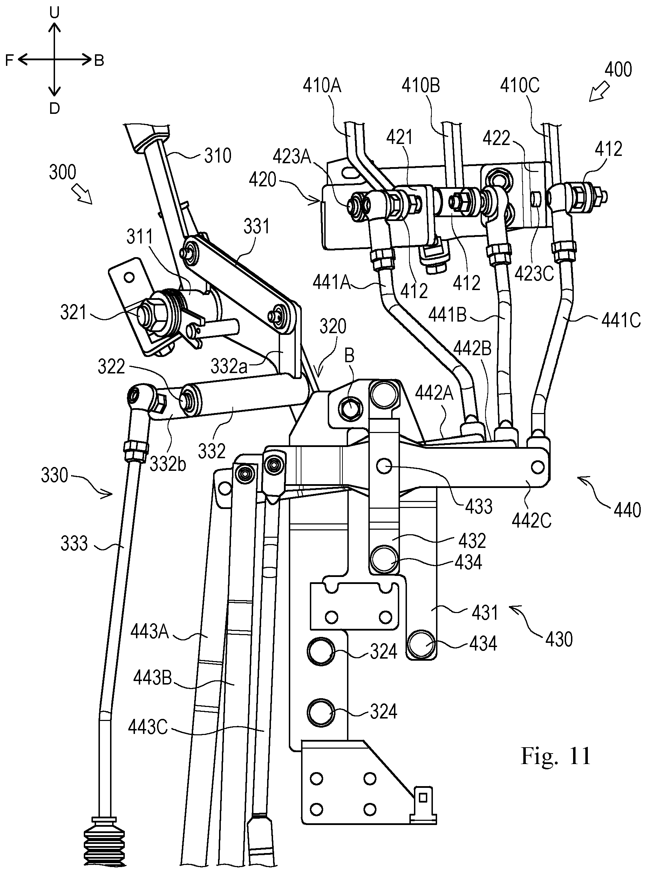

The second support plate 432 shown in Figs. 9 and 11 is a portion that supports the other end (left end) of the second rock shaft 433, which will be described later. The second support plate 432 is formed in an elongated shape long in the vertical direction. The second support plate 432 is bent such that a middle portion in the vertical direction bulges leftward. Upper and lower end portions of the second support plate 432 are both fixed to the first support plate 431.

The second rock shaft 433 shown in Figs. 9, 11, and 12 serves as the center axis for rocking of second rocking portions 442A, 442B, and 442C of the second link mechanism 440, which will be described later. The second rock shaft 433 is formed in a cylindrical shape with the axis line oriented in a substantially left-right direction. One end (right end) of the second rock shaft 433 is fixed to the first support plate 431, and the other end (left end) of the second rock shaft 433 is fixed to the second support plate 432 at the middle portion (the portion bulging leftward) in the vertical direction. In this manner, both ends of the second rock shaft 433 are supported by the first support plate 431 and the second support plate 432.

The bolts 434 shown in Figs. 9 and 11 are fixed to lower portions of the first support plate 431 (portions lower than the second rock shaft 433). The shaft portions (not shown) of the bolts 434 are provided so as to project outward (rightward) from the first support plate 431, and are inserted through the fender 8 (see Fig. 3). Nuts (not shown) are fastened to the bolts 434 from the outer side (right side surface) of the fender 8, and thus, the second support portion 430 is fixed to the fender 8. Note that the present embodiment shows an example in which the second support portion 430 is fixed to the fender 8 by two bolts 434. One of the bolts 434 is also used as a fixing member for fixing the second support plate 432 to the first support plate 431.

Further, as shown in Figs. 8 and 9, an upper portion of the second support portion 430 (a portion higher than the second rock shaft 433) is fixed to the first support portion 320. The upper portion of the second support portion 430 is fixed to the first support portion 320 with a suitable fixing member (for example, a bolt B).

In this manner, the second support portion 430 is not only fixed to the fender 8 at positions lower than the second rock shaft 433, but also is fixed to the first support portion 320 at a position higher than the second rock shaft 433. As the second support portion 430 is fixed to the first support portion 320 in this manner, the second support portion 430 can be reinforced by the first support portion 320. In particular, in the present embodiment, only the portions of the second support portion 430 lower than the second rock shaft 433 are fixed to the fender 8, and therefore, there is a possibility that deflection, deformation, and the like due to the insufficient strength of the upper portion of the second support portion 430 will occur. However, by reinforcing the upper portion of the second support portion 430 with the first support portion 320 as in the present embodiment, it is possible to suppress deflection and the like of the second support portion 430.

The second link mechanism 440 shown in Figs. 8 to 12 is for transmitting operating forces of the three hydraulic operation levers (the first hydraulic operation lever 410A and the like). The second link mechanism 440 mainly includes upper link portions 441A, 441B, and 441C, second rocking portions 442A, 442B, and 442C, lower link portions 443A, 443B, and 443C, and the like.

Note that, in the second link mechanism 440, the upper link portion 441A, the second rocking portion 442A, and the lower link portion 443A are the members for transmitting an operating force of the first hydraulic operation lever 410A, and therefore, reference signs thereof are given the same "A" as that of the reference sign of the first hydraulic operation lever 410A. Similarly, "B" is given to reference signs of the members for transmitting an operating force of the second hydraulic operation lever 410B, and "C" is given to reference signs of the members for transmitting an operating force of the third hydraulic operation lever 410C. Since the structures for transmitting operating forces of the three hydraulic operation levers are similar, descriptions of similar configurations will be omitted as appropriate in the following.

The upper link portion 441A is for transmitting a rocking operation of the first hydraulic operation lever 410A. The upper link portion 441A is formed in a rod-like shape with its longitudinal direction oriented in the vertical direction. The upper link portion 441A is bent as appropriate. An upper end portion of the upper link portion 441A is connected to the arm portion 412 of the first hydraulic operation lever 410A.

Similarly, upper end portions of the upper link portion 441B and the upper link portion 441C are connected to the second hydraulic operation lever 410B and the third hydraulic operation lever 410C, respectively.

The second rocking portion 442A is a member that rocks depending on an operation of the first hydraulic operation lever 410A. The second rocking portion 442A is formed in a plate-like shape with its longitudinal direction oriented in the front-rear direction. A middle portion of the second rocking portion 442A in the front-rear direction is disposed so as to extend between the first support plate 431 and the second support plate 432. The middle portion of the second rocking portion 442A in the front-rear direction is inserted through the second rock shaft 433. Accordingly, the second rocking portion 442A is supported so as to be rockable relative to the second rock shaft 433. A rear end portion of the second rocking portion 442A is connected to a lower end portion of the upper link portion 441A.

The second rocking portions 442A, 442B, and 442C are disposed so as to be laterally aligned. The second rocking portion 442B and the second rocking portion 442C, like the second rocking portion 442A, are supported so as to be rockable relative to the second rock shaft 433. Rear end portions of the second rocking portion 442B and the second rocking portion 442C are connected to lower end portions of the upper link portion 441B and the upper link portion 441C, respectively.

The lower link portion 443A is formed by a member (a plate-like member, a rod-like member, or the like) having its longitudinal direction oriented in the vertical direction. An upper end portion of the lower link portion 443A is connected to a front end portion of the second rocking portion 442A. A lower end portion of the lower link portion 443A is connected to a control valve (not shown) through a suitable link mechanism (not shown). The control valve is operated through an operation of the first hydraulic operation lever 410A, so that feed of operating oil to implements can be controlled.

Similarly, upper end portions of the lower link portion 443B and the lower link portion 443C are connected to the second rocking portion 442B and the second rocking portion 442C, respectively. Upper end portions of the lower link portion 443B and the lower link portion 443C are connected to control valves (not shown) through suitable link mechanisms (not shown).

As described above, the tractor 1 (working vehicle) according to the present embodiment includes:
the position lever 310 that is disposed on the right console 13 (console) provided at a side of the seat 14, and can adjust a lift position of the lifting device 5; and
a plurality of hydraulic operation levers (the first hydraulic operation lever 410A, the second hydraulic operation lever 410B, and the third hydraulic operation lever 410C) that are disposed on the console at a portion on the rear side of the position lever 310, and can control feed of hydraulic pressure to an implement, and
the position lever 310 and the hydraulic operation levers are
disposed such that an operating direction in plan view is parallel to the operating direction of another lever disposed on the front side, or such that an angle with respect to the front-rear direction is greater than the angle of the operating direction of another lever disposed on the front side.

With such a configuration, operability of the position lever 310 and the hydraulic operation levers can be enhanced.

Specifically, the position lever 310 and the hydraulic operation levers are disposed such that a lever disposed farther rearward rocks more outward, and thus, the levers can be disposed in directions in which it is easy for the operator seated in the seat 14 to operate the levers.

Also, the tractor 1 includes:
the first link mechanism 330 that includes the first rocking portion 332 rockable about the first rock shaft 322, and transmits an operating force of the position lever 310;
the first support portion 320 that rockably supports the first rocking portion 332 via the first rock shaft 322;
the second link mechanism 440 that includes second rocking portions 442A, 442B, and 442C rockable about the second rock shaft 433, and transmits operating forces of the hydraulic operation levers; and
the second support portion 430 that rockably supports the second rocking portions 442A, 442B, and 442C via the second rock shaft 433, and is fixed to the first support portion 320.

With such a configuration, the first support portion 320 that supports the first link mechanism 330 (the first rocking portion 332) and the second support portion 430 that supports the second link mechanism 440 (the second rocking portions 442A, 442B, and 442C) are connected to each other, so that one member of the first support portion 320 and the second support portion 430 can be reinforced by the other member. Thus, even in a case where one of the first support portion 320 and the second support portion 430 has a structure difficult to be fixed to the vehicle body (the fender 8 or the like), strength can be secured.

Further, the second support portion 430
is fixed to the fender 8 at a position lower than the second rock shaft 433, and is fixed to the first support portion 320 at a position higher than the second rock shaft 433.

With such a configuration, the second support portion 430 in which the second rock shaft 433 is provided at a position higher than the positions of fixing to the fender 8 can be reinforced by the first support portion 320.

Further, the first support portion 320
is fixed to the fender 8 at a position lower than the second rock shaft 433 and at a position higher than the second rock shaft 433.

With such a configuration, the second support portion 430 can be reinforced more firmly by the first support portion 320 fixed to the fender 8 on both the upper side and the lower side of the second rock shaft 433.

Also, the first support portion 320
is fixed to the fender 8 at a position lower than the first rock shaft 322 and at a position higher than the first rock shaft 322.

With such a configuration, the second support portion 430 can be reinforced more firmly by the first support portion 320 fixed to the fender 8 on both the upper side and the lower side of the first rock shaft 322.

Further, the first support portion 320
rockably supports the position lever 310.

With such a configuration, the structure can be simplified by the first support portion 320 supporting not only the first link mechanism 330 (first rocking portion 332) but also the position lever 310.

Also, the first link mechanism 330 includes
the horizontal link portion 331 that is disposed with its longitudinal direction oriented in a substantially horizontal direction, and connects the position lever 310 and the first rocking portion 332.

With such a configuration, use of the horizontal link portion 331 can increase the degree of freedom in the position of the position lever 310 in the horizontal direction. Thus, the position lever 310 can be disposed at a position where it is easy to operate the position lever 310.

Note that the right console 13 according to the present embodiment is one embodiment of a console according to the present invention.

Note that specific configurations (shapes, positions, fixing methods, and the like of the respective portions) of the position operation mechanism 300 and the hydraulic operation mechanism 400 are not limited to the above embodiment, and can be changed as appropriate. For example, the number, positions, and the like of the hydraulic operation levers can be changed as appropriate. Also, the positions of fixing (positions of fastening with bolts and the like) of the first support portion 320 and the second support portion 430 to the fender 8 can be changed as appropriate.

Further, in the above embodiment, an example in which the second support portion 430 is reinforced by fixing the second support portion 430 to the first support portion 320 has been described. However, the present invention is not limited to this. For example, the first support portion 320 can also be reinforced by fixing the first support portion 320 to the second support portion 430. Which member to reinforce can be selected as appropriate depending on the positions of fixing to the fender 8, the number of fixing portions, or the like.

Further, in the above embodiment, a configuration in which the first support portion 320 supports not only the first link mechanism 330 but also the position lever 310 has been described. However, the present invention is not limited to this, and the position lever 310 can also be supported by a member different from the first support portion 320.

### INDUSTRIAL APPLICABILITY

The present invention can be applied to a working vehicle including hydraulic operation levers.

### REFERENCE SIGNS LIST

1: Tractor
5: Lifting device
10: Cabin
10b: Second floor surface
10c: Opening
13: Right console
14: Seat
110: Loader lever
120: First support portion
123: Left-right rock shaft
130: Second support portion
132: Reinforcement portion
132a: First plate-like portion
132b: Second plate-like portion
210: Closure member
212: Upright portion
220: Pressing member
230: Fixing member
240: Blocking member
310: Position lever
320: First support portion
322: First rock shaft
330: First link mechanism
331: Horizontal link portion
332: First rocking portion
410A: First hydraulic operation lever
410B: Second hydraulic operation lever
410C: Third hydraulic operation lever
430: Second support portion
433: Second rock shaft
440: Second link mechanism
442A: Second rocking portion

## Claims

1. A working vehicle comprising:
a position lever that is disposed on a console provided at a side of a seat, and is capable of adjusting a lift position of a lifting device; and
a plurality of hydraulic operation levers that are disposed on the console at positions on a rear side of the position lever, and is capable of controlling feed of hydraulic pressure to an implement, wherein
the position lever and the hydraulic operation levers are disposed to
make an operating direction in plan view parallel to an operating direction of another lever disposed on a front side, or make an angle with respect to a front-rear direction greater than an angle of an operating direction of another lever disposed on a front side.

2. The working vehicle according to claim 1, further comprising:
a first link mechanism that includes a first rocking portion rockable about a first rock shaft, and transmits an operating force of the position lever;
a first support portion that rockably supports the first rocking portion via the first rock shaft;
a second link mechanism that includes a second rocking portion rockable about a second rock shaft, and transmits an operating force of the hydraulic operation levers; and
a second support portion that rockably supports the second rocking portion via the second rock shaft, and is fixed to the first support portion.

3. The working vehicle according to claim 2, wherein
the second support portion is fixed to a fender at a position lower than the second rock shaft, and is fixed to the first support portion at a position higher than the second rock shaft.

4. The working vehicle according to claim 2, wherein
the first support portion is fixed to the fender at a position lower than the second rock shaft and at a position higher than the second rock shaft.

5. The working vehicle according to claim 2, wherein
the first support portion is fixed to the fender at a position lower than the first rock shaft and at a position higher than the first rock shaft.

6. The working vehicle according to claim 2, wherein
the first support portion rockably supports the position lever.

7. The working vehicle according to any one of claims 2 to 6, wherein
the first link mechanism includes
a horizontal link portion that is disposed with a longitudinal direction oriented in a substantially horizontal direction, and connects the position lever and the first rocking portion.
